Europäisches Patentamt

European Patent Office

Office européen des brevets

(19)

(11) **EP 1 519 113 A2**

(12) **EUROPÄISCHE PATENTANMELDUNG**

(43) Veröffentlichungstag:
  **30.03.2005 Patentblatt 2005/13**

(51) Int Cl.[7]: **F23N 3/08**, F23L 5/02,
  F04D 27/02, H02P 7/29

(21) Anmeldenummer: 04022520.3

(22) Anmeldetag: **22.09.2004**

(84) Benannte Vertragsstaaten:
  **AT BE BG CH CY CZ DE DK EE ES FI FR GB GR
  HU IE IT LI LU MC NL PL PT RO SE SI SK TR**
  Benannte Erstreckungsstaaten:
  **AL HR LT LV MK**

(30) Priorität: **23.09.2003 AT 15002003**

(71) Anmelder: **Vaillant GmbH
  42859 Remscheid (DE)**

(72) Erfinder: **Altendorf, Frank
  51061 Köln (DE)**

(74) Vertreter: **Hocker, Thomas
  Vaillant GmbH
  Berghauser Strasse 40
  42859 Remscheid (DE)**

(54) **Verfahren zur Anpassung der Geräteheizleistung eines gebläseunterstützten Heizgerätes an die individuellen Druckverluste eines Frischluft-Abgas-Leitungssystems**

(57)     Verfahren zur Anpassung der Geräteheizleistung eines gebläseunterstützten Heizgerätes (1) an die Druckverluste eines Frischluft-Abgas-Leitungssytems (2), wobei das Heizgerät (1) eine Regelung (3), eine Vorrichtung zur Einstellung des Brennstoffvolumenstroms (4), ein regelbares Gebläse (5) sowie Mittel zur Erfassung der Gebläsedrehzahl und Gebläseleistung (6, 7) aufweist, bei dem die Geräteheizleistung in Abhängigkeit der Gebläsedrehzahl und elektrischen Gebläseleistung geregelt oder gesteuert wird.

Fig. 1

## Beschreibung

Die Erfindung bezieht sich auf ein Verfahren zur Anpassung der Geräteheizleistung eines gebläseunterstützten Heizgerätes an die individuellen Druckverluste eines Frischluft-Abgas-Leitungssystems.

Bei üblichen brennstoffbeheizten Heizgeräten werden der Brennstoff und die Verbrennungsluft in einem bestimmten vorgegebenen Verhältnis miteinander vermischt. Hierzu wird zumeist ein pneumatischer Brenngas-Luft-Verbund eingesetzt, bei dem die Brenngasmenge der Luftmenge angepasst wird.

Gemäß Bernoulli-Gleichung

$$p + \rho * g * h + \frac{\rho}{2} * c^2 = \text{const.}$$

besteht der Druck aus einem statischen und einem dynamischen Teil. Dies bedeutet für Frischluft-Abgas-Leitungssysteme, dass je länger eine Abgasleitung ist, umso größer ist deren Druckverlust. Der statische Anteil ist demnach höher und es kann weniger Gas gefördert werden.

Ein Heizgerät ist über eine Frischluft-Abgas-Leitung mit der Umwelt verbunden. Je nach Länge dieses Leitungssystems kann der Widerstand, welcher das Leitungssystem der Strömung entgegensetzt, wesentlich variieren. Dies hat zur Folge, dass bei einer vorgegebenen Drehzahl eines Gebläses zur Förderung des Brennluftvolumenstroms der Volumenstrom stark variieren kann. Da ein Heizgerät in der Regel eine bestimmte Nennleistung hat, ist zur Erreichung dieser Nennleistung auch ein gewisser Luftvolumenstrom notwendig. Daher muss die Gebläsedrehzahl an den Widerstand des Frischluft-Abgas-Leitungssystems angepasst werden. Gemäß dem Stand der Technik geschieht dies dadurch, dass der Verbrennungsluftvolumenstrom über eine Druckverlustmessung an einer Drossel gemessen wird. Dem entsprechend wird die Geräteleistung entsprechend einem Druckverlustsignal geregelt.

Würde ein Heizgerät nicht individuell an ein Frischluft-Abgas-Leitungssystem angepasst, so könnte der Modulationsbereich - also der Bereich von minimaler bis zur maximalen Heizleistung erheblich schwanken. Ermöglichte beispielsweise ein hoher Druckverlust nur geringe Fördermengen an Luft bei Standardansteuerung des Gebläses, so würde durch die Kopplung der Brenngasmenge an die Luftmenge auch nur verhältnismäßig wenig Brenngas der Luft beigemischt. Demzufolge wäre die Maximalleistung des Heizgerätes stark eingeschränkt. Am unteren Ende der Leistungsmodulation bestünde zudem das Problem, dass gegebenenfalls keine stabile Flamme vorläge. Würde zuviel Luft gefördert, so wäre die Maximalleistung des Heizgerätes zu hoch, die Flamme könnte gegebenenfalls abheben und es könnte zu hohen Schadstoffemissionen kommen.

Die EP 981 025 A1 befasst sich mit der Anpassung einer Heizeinrichtung an ein individuelles Luft-Abgas-System. Diese erfolgt manuell durch den Installateur, der die Länge der Abgasleitung misst und diese über eine manuell Eingabevorrichtung eingibt. Die Gebläseansteuerung erfolgt nun mithilfe in einem Speicher abgelegten Kennlinien. Eine automatische Anpassung erfolgt nicht, so dass es nicht ausgeschlossen werden kann, dass die Einstellung falsch oder überhaupt nicht vorgenommen wird, so dass der Betrieb beeinträchtigt ist.

Der Erfindung liegt die Aufgabe zugrunde, ohne eine Druckverlustmessung oder manuelle Eingabe eine Anpassung der Geräteheizleistung an die Druckverluste eines Frischluft-Abgas-Leitungssystems zu ermöglichen.

Die Aufgabe wird gemäß den Merkmalen des unabhängigen Patentanspruchs 1 dadurch gelöst, dass bei einem regelbaren Gebläse Mittel zur Erfassung der Gebläsedrehzahl und der Gebläseleistung vorgesehen sind und entsprechend dem Vergleich einer Messung bei Verwendung eines anzupassenden Frischluft-Abgas-Leitungssystems mit Referenzwerten die Heizleistung eingestellt wird. Bei mindestens einer vorgegebenen Drehzahl wird bei Verwendung eines anzupassenden Frischluft-Abgas-Leitungssystems die gemessene Leistungsaufnahme mit der Leistungsaufnahme des Gebläses bei der- oder denselben selben Drehzahlen unter Referenzbedingungen verglichen. Je nach gemessener Leistungsaufnahme wird für den Betrieb des Heizgerätes das Verhältnis Gebläsedrehzahl zu Geräteleistung entsprechend einer Kennlinie oder eines Algorithmusses festgelegt.

Alternativ hierzu kann gemäß den Merkmalen des Anspruchs 2 bei mindestens einer vorgegebenen Leistungsaufnahme des Gebläses die Drehzahl erfasst werden und hieraus eine Korrektur erfolgen.

Gemäß den Merkmalen des abhängigen Anspruchs 3 kann bei mehreren vorgegebenen Drehzahlen oder Leistungsaufnahmen mindestens ein Gradient bestimmt werden und durch einen Vergleich dieses Gradienten mit einem Referenzwert das Verhältnis Gebläsedrehzahl zu Gebläseleistung wiederum entsprechend einer Kennlinie oder eines Algorithmusses festgelegt werden. Hieraus ergibt sich der Vorteil, dass das System in dem Fall, in dem kein lineares Verhalten über den gesamten Modulationsbereich vorliegt, die Anpassung individueller erfolgt. So unterscheidet sich beispielsweise der Druckverlust, den ein Rohrbogen verursacht von dem Druckverlust, den ein gerades Wegstück verursacht.

Gemäß den Merkmalen des abhängigen Anspruchs 4 wird die Gebläseleistung mittels eines Pulsweitenmodulationssignals erfasst.

Gemäß den Merkmalen des Anspruchs 5 werden die Referenzwerte in einem Speicher der Geräteregelung abgespeichert.

Gemäß den Merkmalen des Anspruchs 6 kann festgestellt werden, ob das Frischluft-Abgas-Leitungssystem auf der Frischluft- und / oder Abgasseite verstopft ist und somit ein regulärer Betrieb unmöglich ist.

Die Erfindung wird nun anhand der Figuren näher erläutert. Hierbei zeigen

Figur 1 ein Heizgerät zur Durchführung des erfindungsgemäßen Verfahrens,

Figur 2 charakteristische Kennlinien eines Gebläses bei unterschiedlichen Lastzuständen,

Figur 3 eine charakteristische Kennlinie des Verhältnisses Drehzahl zu elektrischer Leistung bei konstantem Volumenstrom und steigendem Druckverlust,

Figur 4 eine Kennlinie zur Ermittlung der korrigierten Drehzahl in Abhängigkeit der gemessenen elektrischen Leistung und

Figur 5 ein Pulsweitenmodulationssignal.

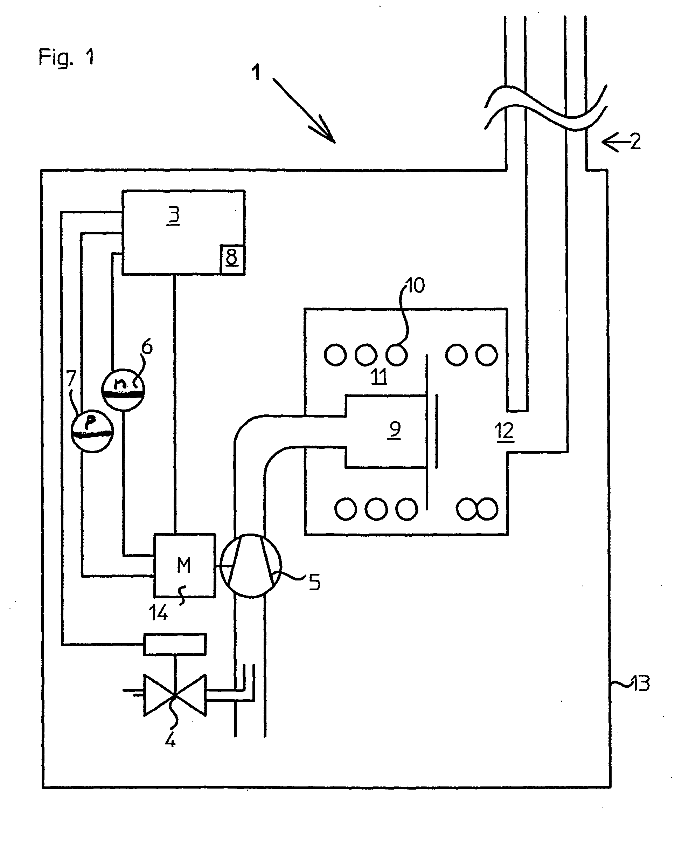

Figur 1 zeigt ein Heizgerät 1 mit einem Frischluft-Abgas-Leitungssystem 2. Die Komponenten des Heizgerätes 1 befinden sich innerhalb einer Unterdruckkammer 13, ein Brenner 9 ist mit einem Gebläse 5 verbunden. Auf der Eingangsseite des Gebläses 5 befindet sich die Brenngaszufuhr mit einem regelbaren Brenngasventil 4, das mit der Regelung 3 verbunden ist. Das Gebläse 5 verfügt über einen Motor 14, der wiederum mit der Regelung 3 verbunden ist und ferner eine Drehzahlerfassung 6 sowie eine Leistungserfassung 7 aufweist. Der Brenner 9 befindet sich in einem Brennraum 11, der durch einen Wärmetauscher 10 abgegrenzt ist. Der Wärmeaustauscher 10 ist über einen Abgassammler 12 mit dem Frischluft-Abgas-Leitungssystem 2 verbunden. Die Regelung 3 verfügt über einen Speicher 8.

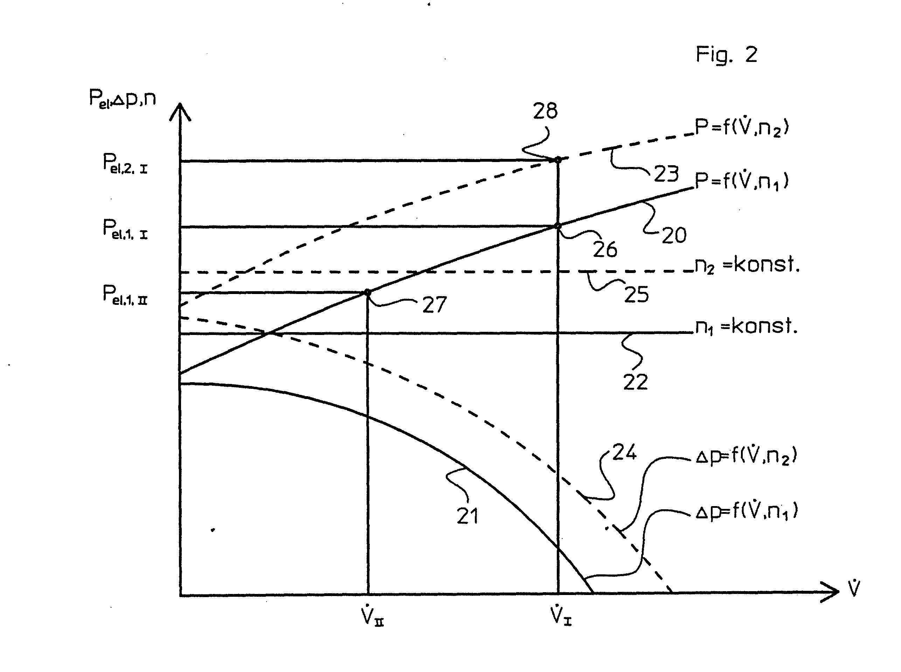

Beim Betrieb des Heizgerätes steuert die Regelung 3 den Motor 14 des Gebläses 5 an, wonach das Gebläse 5 einen gewissen Volumenstrom liefert. Die Regelung 3 steuert entsprechend das regelbare Gasventil 4, so dass ein bestimmter Gasvolumenstrom zugemischt wird. Das Brenngas-Luftgemisch strömt in den Brenner 9 ein und verbrennt in der Brennkammer 11, die Abgase durchströmen den Wärmetauscher 10 und geben dabei ihre Wärme an ein nicht weiter dargestelltes Heiznetz ab. Die abgekühlten Abgase werden im Abgassammler 12 gesammelt und anschließend durch die innere Leistung des Frischluft-Abgas-Leitungssystems 2 in die Atmosphäre geblasen. Die Frischluft, die vom Gebläse 5 angesaugt wird, wird durch die äußere koaxiale Leitung des Frischluft-Abgas-Leitungssystems 2 aus der Umgebung in die Unterdruckkammer 13 angesaugt. Figur 2 zeigt typische Leistungsdruckverluste und Drehzahlkennlinien eines Gebläses in Abhängigkeit des Volumenstromes. Auf der X-Achse ist der Volumenstrom aufgetragen, auf der Y-Achse die elektrische Leistung, der Druckverlust und die Drehzahl. Es ist bekannt, dass die elektrische Leistungsaufnahme eines Gebläses vom Druckverlust des Leitungssystems, dem Volumenstrom sowie der Drehzahl des Gebläses abhängig ist. Linie 22 zeigt eine Linie konstanter Drehzahl $n_1$ über variablem Volumenstrom, Linie 20 die dazu passende elektrische Aufnahmeleistung als Funktion des Volumenstromes sowie dieser konstanten ersten Drehzahl $n_1$. Die Linie 21 zeigt den Druckverlust als Funktion des variablen Volumenstroms und der konstanten Drehzahl $n_1$. Linie 25 zeigt eine Linie konstanter Drehzahl $n_2$, die höher als $n_1$ ist. Hierzu zeigt die Linie 23 die elektrische Leistungsaufnahme als Funktion des variablen Volumenstroms und der konstanten Drehzahl $n_2$. Die Linie 24 zeigt den Druckverlust als Funktion des variablen Volumenstroms und der konstanten Drehzahl $n_2$.

Zur Anwendung des erfindungsgemäßen Verfahrens sei angenommen, dass das Heizgerät mit einem Referenz-Frischluft-Abgas-Leitungssystems verbunden ist, das zudem für den Beispielfall das kürzeste zulässige Frischluft-Abgas-Leitungssystem sei. Bei einer Drehzahl $n_1$ stellt sich eine elektrische Leistung $P_{el,1,I}$ (Index arabische Ziffer: Drehzahl, Index römische Ziffer: Volumenstrom) ein. Dieser Punkt ist im Diagramm mit 26 bezeichnet. Wird nun im realen Zustand die Heizungsanlage mit einem unbekannten Frischluft-Abgas-Leitungssystem verbunden, das einen höheren Druckverlust aufweist als das Referenzsystem, so wird die Anlage bei gleicher Drehzahl $n_1$ betrieben. Es stellt sich ein geringerer Volumenstrom $\dot{v}_n$ ein, wie auf der Linie 20 zu erkennen ist. Am Punkt 27 wird eine Leistung $P_{el,1,II}$ gemessen. Hieraus wird deutlich, dass das System einen kleineren Volumenstrom fördert, als man ihn zur Gerätesollleistung benötigt. Benötigt wird wiederum ein Volumenstrom $\dot{v}_I$, der sich bei erhöhter Drehzahl $n_2$ ergäbe, wie im Diagramm in Punkt 28 auf der Linie 23 dargestellt. Die dazugehörige elektrische Leistung betrüge $P_{el,2,I}$. Ziel des Verfahrens ist, jenen Punkt 28 anzusteuern.

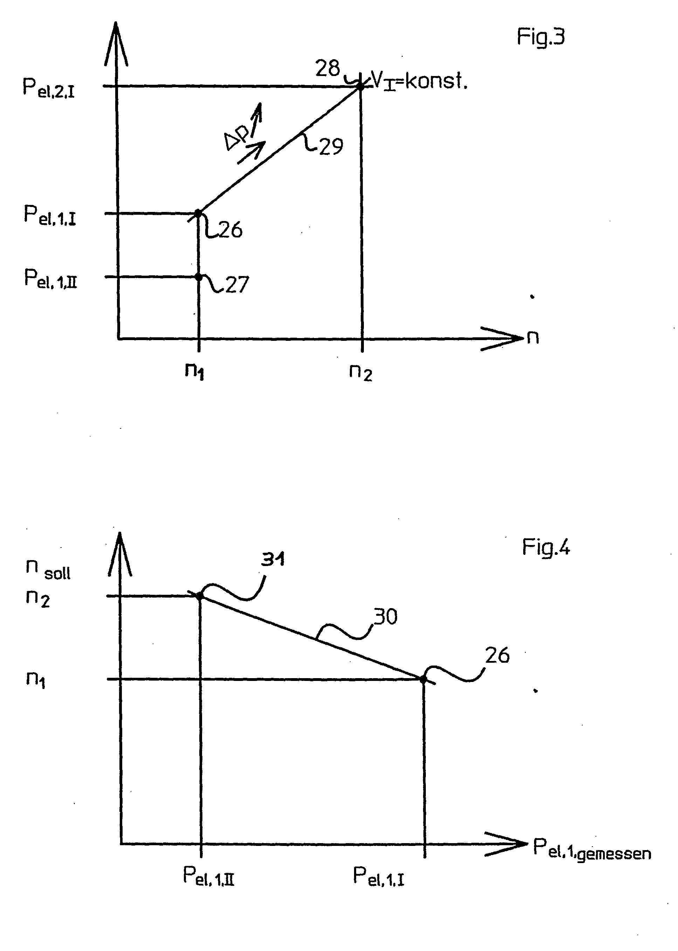

Aus Figur 3 geht das Verhältnis zwischen der gemessenen elektrischen Leistung des Motors im Verhältnis zur Gebläsedrehzahl bei konstantem Volumenstrom $\dot{v}_I$ hervor. Die Linie 29 verdeutlicht, bei welcher Drehzahl sich welche elektrische Leistung einstellt. Der Punkt 26 verdeutlicht den Referenzpunkt mit dem vorgegebenen Frischluft-Abgas-Leitungssystem und der Punkt 28 den Sollpunkt bei dem anzupassenden Frischluft-Abgas-Leitungssystem. Mit dem anzupassenden Leitungssystem und der vorgegebenen Drehzahl $n_1$ stellt sich der Punkt 27 ein, wobei eine entsprechende elektrische Leistung $P_{el,1,II}$ gemessen werden kann. Die Kennlinie 29 wird in Laborversuchen ermittelt.

Figur 4 zeigt eine ebenfalls im Labor ermittelte Kennlinie 30, welche verdeutlicht, wie hoch die Solldrehzahl bei einer entsprechenden gemessenen elektrischen Leistung sein sollte. Der Punkt 26 stellt wiederum den Referenzpunkt dar. Wird - wie bei Figur 3 erläutert - eine elektrische Leistungsaufnahme $P_{el,1,II}$ gemessen, so ist aus Laborversuchen bekannt, dass diese elektrische Leistungsaufnahme für einen bestimmten Druckverlust signifikant ist. Um den gleichen Volumenstrom $\dot{v}_l$ zu erzielen, wird eine erhöhte Drehzahl $n_2$ benötigt.

Die Kennlinie 30 enthält für alle Druckverluste möglicher Frischluft-Abgas-Leitungssysteme die Zuordnung der notwendigen Drehzahl n des Gebläses zur Erzielung des Referenzvolumenstroms $\dot{v}_l$ in Abhängigkeit der gemessenen Gebläseleistung $P_{el,1}$ bei Referenzdrehzahl $n_1$.

Im Beispielfall verdeutlicht der Punkt 31 die nun notwendige Drehzahl $n_2$ zur Erzielung des Volumenstroms $\dot{v}_l$ bei dem unbekannten Frischluft-Abgas-Leitungssystem. Aus dem nun bekannten Zusammenhang $n_2$ zu $\dot{v}_l$ lässt sich für alle Volumenströme die notwendige Drehzahl durch einen (nahezu) linearen Zusammenhang darstellen ($\dot{v}$ = Konstante x n).

Erfindungsgemäß wird somit über die Messung der Gebläsedrehzahl in Verbindung mit der elektrischen Gebläseleistung der geförderte Luftvolumenstrom bestimmt, dem dann die entsprechende Brenngasmenge zugeordnet und entsprechend zugeführt wird. Der Modulationsbereich des Heizgerätes, der Bereich von Minimallast zur Maximallast, wird durch die ermittelte Minimaldrehzahl und Maximaldrehzahl festgelegt.

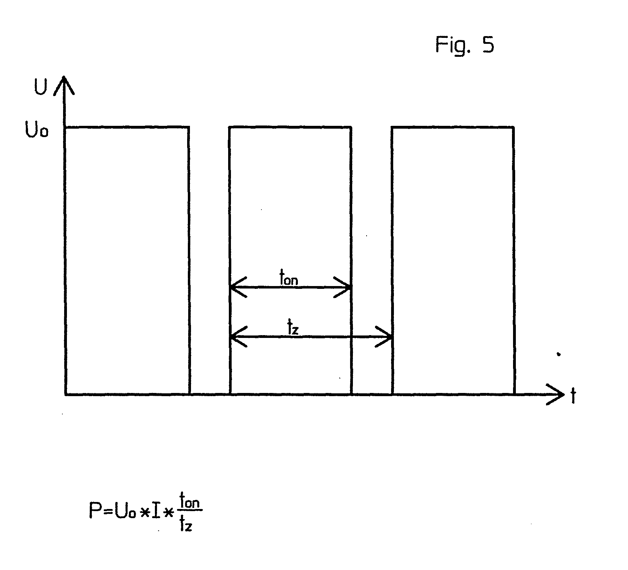

Die Drehzahl des Gebläses wird beispielsweise durch einen Hallsensor erfasst. Die Gebläseleistung ergibt sich aus dem Produkt von Strom und Spannung, welche das Gebläse beaufschlagen. Beim Pulsweitenmodulationsverfahren wird die Leistung bestimmt durch die Bestromungsdauer (vgl. Fig. 5). Bei einer Spannung $U_0$ und einem Strom I sowie einem Bestromungszeitraum $t_{on}$ sowie einer Zykluszeit $t_z$ ergibt sich die Leistung als

$$P = U_0 * I * \frac{t_{on}}{t_z}.$$

Neben der Anwendung des Pulsweitenmodulationsverfahrens kann erfindungsgemäß auch jedes andere Messverfahren zur Bestimmung der Geräteleistung zum Einsatz kommen.

Neben der individuellen Anpassung an das Frisch-Luft-Leitungssystem kann erfindungsgemäß überprüft werden, ob das Frisch-Luft-Leitungssystem verstopft ist. Bei konstanter Gebläsedrehzahl sinkt die aufgenommene elektrische Gebläseleistung je weiter der geförderte Volumenstrom gedrosselt wird. Die minimale aufgenommene elektrische Gebläseleistung wird bei vollkommen geschlossenem Strömungsweg erreicht (vgl. Fig. 2, Linien P = f(Volumenstrom, Drehzahl)). Wenn diese minimale aufgenommene elektrische Gebläseleistung bekannt ist, kann erkannt werden, ob ein Gebläse einen Volumenstrom fördert oder nicht.

Bei einem Heizgerät wird hierzu - z.B. unter Referenzbedingungen beim Hersteller - eine definierte Gebläsedrehzahl angefahren, wobei das Frisch-Luft-Leitungssystem komplett verschlossen ist. Es wird die aufgenommene elektrische Leistungsaufnahme des Gebläsemotors gemessen. Der gemessene Wert wird abgespeichert und beispielsweise im Speicher der Regelung des Heizgerätes abgelegt.

Wird nun ein Heizgerät individuell an eine Luft- und Abgasleitung angeschlossen, so kann überprüft werden, ob eine komplette Verstopfung der Luft- und Abgasleitung vorliegt. Zu diesem Zweck wird z.B. nach der Erstinbetriebnahme oder vor jedem Heizbetrieb die oben genannte definierte Gebläsedrehzahl angefahren und überprüft, ob die aufgenommene elektrische Leistungsaufnahme des Gebläsemotors oben ermittelten Referenzwert liegt. Ist dies der Fall, so liegt keine vollständige Verstopfung des Luft-/Abgasweges vor. Wird nur die minimale aufgenommene elektrische Gebläseleistung gemessen, so liegt eine vollständige Verstopfung des Luft-/Abgasweges vor. In diesem Fall erzeugt die Gerätelektronik eine Fehlermeldung und verhindert, dass der Brenner des Heizgerätes in Betrieb geht. Um Serienstreuungen und auch eine fast vollständig verschlossene Leitung ebenfalls zu berücksichtigen, ist es sinnvoll, dass der Referenzwert etwas größer als der experimentell ermittelte Wert ist.

**Patentansprüche**

1. Verfahren zur Anpassung der Geräteheizleistung eines gebläseunterstützten Heizgerätes (1) an die Druckverluste eines Frischluft-Abgas-Leitungssytems (2), wobei das Heizgerät (1) eine Regelung (3), eine Vorrichtung zur Einstellung des Brennstoffvolumenstroms (4), ein regelbares Gebläse (5) sowie Mittel zur Erfassung der Gebläsedrehzahl und Gebläseleistung (6, 7) aufweist, **dadurch gekennzeichnet, dass** die Gebläsedrehzahl in Abhängigkeit der elektrischen Gebläseleistung bei mindestens einer vorgegebenen Gebläsedrehzahl geregelt oder gesteuert wird, wobei die Leistungsaufnahme des Gebläses (5) bei mindestens einer vorgegebenen Drehzahl bei Verwendung eines anzupassenden Frischluft-Abgas-Leitungssytems (2) mit der Leistungsaufnahme des Gebläses (5) bei der- oder denselben Drehzahl beziehungsweise Drehzahlen unter Referenzbedingungen verglichen wird und das Verhältnis Gebläsedrehzahl zu Geräteleistung entsprechend einer Kennlinie oder eines Algorithmusses festgelegt wird.

2. Verfahren zur Anpassung der Geräteheizleistung eines gebläseunterstützten Heizgerätes (1) an die Druckverluste eines Frischluft-Abgas-Leitungssytems (2), wobei das Heizgerät (1) eine Regelung (3), eine Vorrichtung zur Einstellung des Brennstoffvolumenstroms (4), ein regelbares Gebläse (5) sowie Mittel zur Erfassung der Gebläsedrehzahl und Gebläseleistung (6, 7) aufweist, **dadurch gekennzeichnet, dass** die Gebläsedrehzahl in Abhängigkeit der elektrischen Gebläseleistung bei mindestens einer vorgegebenen Gebläsedrehzahl geregelt oder gesteuert wird, wobei die Drehzahl des Gebläses (5) bei mindestens einer vorgegebenen Leistungsaufnahme bei Verwendung eines anzupassenden Frischluft-Abgas-Leitungssytems (2) mit der Drehzahl des Gebläses (5) bei der- oder denselben Leistungsaufnahme beziehungsweise Drehzahlen unter Referenzbedingungen verglichen wird und das Verhältnis Gebläsedrehzahl zu Geräteleistung entsprechend einer Kennlinie oder eines Algorithmusses festgelegt wird.

3. Verfahren gemäß Anspruch 1 oder 2, **dadurch gekennzeichnet, dass** bei mehreren vorgegebenen Drehzahlen oder Leistungsaufnahmen mindestens ein Gradient bestimmt wird, dieser mindestens eine Gradient mit mindestens einem Referenzwert verglichen wird und das Verhältnis Gebläsedrehzahl zu Geräteleistung entsprechend einer Kennlinie oder eines Algorithmusses festgelegt wird.

4. Verfahren gemäß einem der Ansprüche 1 bis 3, **dadurch gekennzeichnet, dass** zur Erfassung der Gebläseleistung ein Pulsweiten-Modulations-Signal verwendet wird.

5. Verfahren gemäß einem der Ansprüche 1 bis 4, **dadurch gekennzeichnet, dass** die Referenzwerte in einem Speicher (8) der Geräteregelung (3) abgespeichert sind.

6. Verfahren zur Überprüfung eines Frischluft-Abgas-Leitungssytems (2) eines gebläseunterstützten Heizgerätes (1), wobei das Heizgerät (1) eine Regelung (3), ein regelbares Gebläse (5) sowie Mittel zur Erfassung der Gebläsedrehzahl und Gebläseleistung (6, 7) aufweist, **dadurch gekennzeichnet, dass** die Gebläseleistung bei mindestens einer vorgegebenen Gebläsedrehzahl erfasst wird, die mindestens eine erfasste Gebläseleistung mit mindestens einem vorgegebenen Grenzwert verglichen wird oder die Gebläsedrehzahl bei mindestens einer vorgegebenen Gebläseleistung erfasst wird, die mindestens eine erfasste Gebläsedrehzahl mit mindestens einem vorgegebenen Grenzwert verglichen wird und bei Unterschreitung oder Überschreitung dieses Grenzwertes ein Warnhinweis ausgegeben und / oder das Heizgerät (1) abgeschaltet wird.

Fig. 1

Fig. 2

Fig.3

Fig.4

Fig. 5

$$P = U_0 * I * \frac{t_{on}}{t_z}$$